**Europäisches Patentamt**

**European Patent Office**

**Office européen des brevets**

(11) Veröffentlichungsnummer: **0 014 827**
**B1**

# EUROPÄISCHE PATENTSCHRIFT

(45) Veröffentlichungstag der Patentschrift:
13.04.83

(21) Anmeldenummer: 80100115.7

(22) Anmeldetag: 10.01.80

(51) Int. Cl.³: **B 01 D 53/04**, B 01 D 53/34,
C 01 C 1/12

(54) Verfahren zur Beseitigung von Ammoniak aus Prozessabgasen und Einrichtung zur Durchführung dieses Verfahrens.

(30) Priorität: 23.01.79 DE 2902503

(43) Veröffentlichungstag der Anmeldung:
03.09.80 Patentblatt 80/18

(45) Bekanntmachung des Hinweises auf die Patenterteilung:
13.04.83 Patentblatt 83/15

(84) Benannte Vertragsstaaten:
BE DE FR GB

(56) Entgegenhaltungen:
DE-A-2 649 294
GB-A-495 026

(73) Patentinhaber: ALKEM GMBH, Postfach 110069,
D-6450 Hanau 11 (DE)

(72) Erfinder: Herrmann, Fritz, Dr., Bruchwiesenweg 15,
D-6450 Hanau 9 (DE)

(74) Vertreter: Mehl, Ernst, Dipl.-Ing. et al, Postfach 22 01 76,
D-8000 München 22 (DE)

# Verfahren zur Beseitigung von Ammoniak aus Prozeßabgasen und Einrichtung zur Durchführung dieses Verfahrens

Die Erfindung betrifft ein Verfahren zur Beseitigung von Ammoniak aus Prozeßabgasen, insbesondere nach vorausgegangener $NH_3/CO_2$-Absorptionswäsche, wobei die Prozeßabgase nacheinander mehrere Molekularsiebe durchlaufen, und eine Einrichtung zur Durchführung dieses Verfahrens.

Ein solches Verfahren ist aus der DE-A-2 649 294 bekannt, in der eine Anordnung zur Ammoniakführung in Kopiergeräten beschrieben ist. Die Handhabung von Ammoniak ($NH_3$) ist nicht unproblematisch, da es einerseits mit Luft explosive Gemische bilden kann und andererseits die Atemwege ätzt. Darüber hinaus zeigen $NH_3$-Gehalte in Luft auch weit unter den festgelegten MAK-Werten eine langfristige, stark korrosive Wirkung auf Buntmetallbestandteile vorhandener Anlagenteile. Dementsprechend absorbieren die Molekularsiebe in der bekannten Vorrichtung zuerst Wasser und dann Ammoniak, während sie beim Regenerieren erst Ammoniak und dann Wasser abgeben.

In der Kernverfahrenstechnik wird Ammoniak im Bereich der Brennelementfertigung bei der Herstellung von Kernbrennstoffen eingesetzt. Um zu vermeiden, daß es dort z. B. aus chemischen Reaktionsgefäßen in die umgebende Atmosphäre unkontrolliert austritt und diese kontaminiert, ist diesem Herstellungsverfahren eine Absorptions- und Sprühwäsche nachgeschaltet.

In der Plutoniumtechnologie sind die Apparate zur Absorptions- und Sprühwäsche in Handschuhboxen untergebracht, die gegenüber der Umgebung unter einem bestimmten Unterdruck stehen, der durch Luftabsaugung aus diesen Boxen erzeugt wird. Durch diesen Unterdruck bedingt verschlechtern sich die Absorptionswerte in der Ammoniakwäsche, was größer dimensionierte Einheiten verlangt.

Die hier bisher verwendeten Absorptionswasch-Einrichtungen, die nicht nur $NH_3$, sondern zur Vermeidung von Kontamination der Umgebungsatmosphäre auch $CO_2$ mittels flüssiger Absorbentien entfernen müssen, benötigen zusätzliche Stoffe im aktiven Bereich, was man im Sinne einer Abfallminderung möglichst vermeiden will. Außerdem werden Pumpen benötigt, welche im Dauerbetrieb erfahrungsgemäß öfters gewartet und repariert werden müssen.

Der Erfindung liegt die Aufgabe zugrunde, die Verwendung von Pumpen zu vermeiden, die Regenerierbarkeit der verwendeten absorbierenden Materialien zu gewährleisten und eine einfache Rückführung der den Prozeßabgasen entnommenen Stoffe ohne Kontamination der Umgebungsatmosphäre zu ermöglichen.

Zur Lösung dieser Aufgabe ist ein Verfahren der eingangs erwähnten Art erfindungsgemäß dadurch gekennzeichnet, daß als Molekularsiebe solche mit spezifischer Absorptionswirkung gegenüber $H_2O$, $NH_3$ und $CO_2$ verwendet werden, die Prozeßabgase nach Verlassen der Molekularsiebstrecke ein Katalysatorsystem zur Verbrennung von $NH_3$-Resten zu $NO_x$ und schließlich erneut ein Molekularsieb zur $NO_x$-Absorption durchlaufen.

Eine Einrichtung zur Durchführung dieses Verfahrens ist vorteilhafterweise dadurch gekennzeichnet, daß in einer Ableitung für die Prozeßabgase zwei parallel liegende Molekularsiebe zur Absorption von Ammoniak angeordnet sind, an die ein Katalysator zum Verbrennen von Ammoniakresten zu $NO_x$ mit zwei nachgeschalteten, zueinander parallelen Molekularsieben und zur Absorption von $NO_x$ angeschlossen ist, daß jedes der Molekularsiebe für Ammoniak neben einem Abschnitt zum Abtrennen von Ammoniak einen Abschnitt zum Abtrennen von $H_2O$ und einen Abschnitt zum Abtrennen von $CO_2$ aus den Abgasen enthält, daß dem Ausgang eines jeden Molekularsiebes Meßgeräte für Ammoniak bzw. für $NO_x$ zugeordnet sind, von denen Umschaltventile derart in Steuerabhängigkeit stehen, daß das eine von zwei parallelen Molekularsieben aus dem Abgasweg herausgeschaltet und dafür das andere in den Abgasweg hineingeschaltet wird, wenn eines der Meßgeräte Ammoniak- bzw. $NO_x$-Gehalt feststellt und daß den Molekularsieben eine Einrichtung zum Spülen mit Stickstoff zu Regenerierzwecken zugeordnet ist, die derart mit den Umschaltventilen gekoppelt ist, daß aus dem Abgasweg herausgeschaltete Molekularsiebe mit Stickstoff gespült werden.

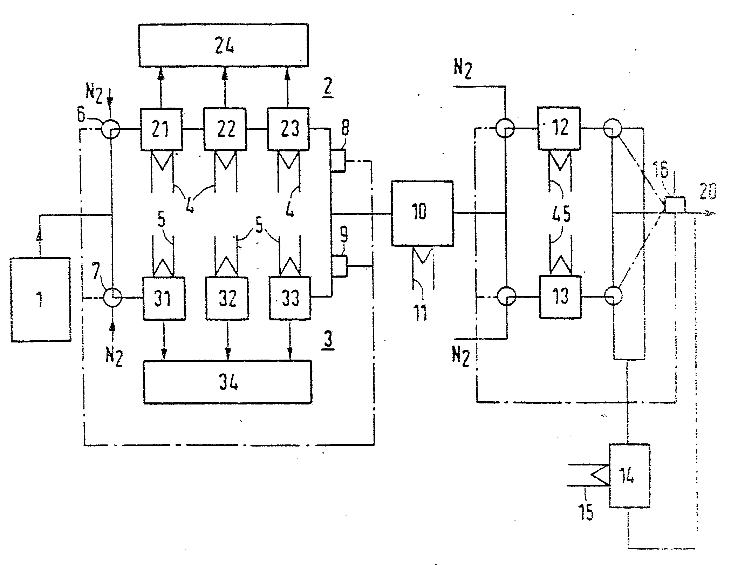

Die Erfindung und ihre Vorteile werden anhand der Zeichnung, die ein Funktionsschema darstellt, näher erläutert:

Die in einem Reaktionsgefäß 1 entstehenden Prozeßabgase, die ammoniakhaltig sind, werden einem Molekularsieb 2 zugeführt. Dieses besteht in diesem Beispiel aus drei Abschnitten 21, 22 und 23, deren jeder elektrisch beheizbar ist (4). Durch die unterschiedliche Spezifikation dieser einzelnen Molekularsiebe wird in ihnen getrennt $H_2O$, $NH_3$ und $CO_2$ absorbiert. Die Wirkungsweise von Molekularsieben ist an sich bekannt und braucht daher hier nicht näher erläutert zu werden. Sie sind in der Lage, bis zu 20% ihres Eigengewichtes an Gasen zu absorbieren. Das das Molekularsieb 2 verlassende Prozeßabgas wird in der Meßeinrichtung 8 ständig auf seinen $CO_2$- und Ammoniakgehalt gemessen.

Wenn das Molekularsieb 2 voll beladen ist, bricht $CO_2$ und $NH_3$ durch, was in dieser Meßeinrichtung 8 automatisch festgestellt wird. Dies bewirkt sodann ein Schließen des Dreiwegeventils 6 und ein Öffnen des Dreiwegeventils 7, so daß nunmehr die parallelgeschaltete Molekularsiebstrecke 3, bestehend aus den Abschnitten 31, 32, 33, mit den Heizeinrichtungen 5 und der Gasrückführungseinrichtung 34, durchströmt wird. Nunmehr überwacht die Meßeinrichtung 9 den Gasstrom. Die Umschaltung des Ventils 6 bewirkt ein Einströmen von Stickstoff in das Molekularsieb 2, gleichzeitig wird die Heizeinrichtung 4 eingeschaltet und dadurch die absorbierten Gase in die Gasrückführungseinrichtung 24 ausgetrieben, die Molekularsiebe also regeneriert. Auf diese Weise läuft immer ein Molekularsieb im Absorptionsbetrieb und eines im Regenerierungsbetrieb. Den Molekularsieben 2 und 3 ist ein Katalysator 10, der beheizbar ist, nachgeschaltet, in welchem etwa noch vorhandenes $NH_3$ zu $NO_x$ verbrannt wird. Dieses wiederum wird dann in einem nachgeschalteten Molekularsieb 12 bzw. 13, welche im sauren Betrieb arbeiten können, absorbiert. Auch diese beiden Molekularsiebe 12 und 13 sind in ähnlicher Weise wie die Molekularsiebe 2 und 3 umschaltbar, mit Stickstoff $N_2$ spülbar sowie beheizbar 45 und können über eine $NO_x$-Abgasreinigung 14, die ebenfalls beheizbar 15 ist, wieder regeneriert werden. Die aus der Abgasreinigung 14 kommende Strömung kann dann zur Abluft 20 gegeben werden. Die Einschaltung der $NO_x$-Abgasreinigung 14 wird dabei vom Meßgerät 16 gesteuert.

Das hier vorgeschlagene System hat den Vorteil, bis auf den Austausch der Siebe wartungsfrei innerhalb und außerhalb einer Handschuhbox montierbar zu sein und voll automatisiert werden zu können. Die Abfallmengen sind bei turnusgemäßem Wechsel der Absorptionsmaterialien gering und als Abfall gut zu konditionieren, da sie aus anorganischem Molekularsiebmaterial, also aus Silikaten, d. h. Alumosilikaten, bestehen. Ein weiterer Vorteil dieses Verfahrens liegt darin, daß nicht nur $NH_3$ und $CO_2$, sondern auch Aerosole aus dem Abgas entfernt werden.

Ein weiterer Vorteil liegt in der Vermeidung von Pumpen, wodurch Wartung und Steuerung vereinfacht werden. Ferner ist es ohne weiteres möglich, diesem System eine nasse $NH_3/CO_2$-Absorptionswäsche vorzuschalten. In diesem Fall ist es allerdings notwendig, die Feuchte des Abgases aus der Naßwäsche, z. B. durch Kühlung und Füllkörper, weit unter den Taupunkt herabzusetzen.

### Patentansprüche

1. Verfahren zur Beseitigung von Ammoniak aus Prozeßabgasen, insbesondere nach vorausgegangener $NH_3/CO_2$-Absorptionswäsche, wobei die Prozeßabgase nacheinander mehrere Molekularsiebe durchlaufen, dadurch gekennzeichnet, daß als Molekularsiebe solche mit spezifischer Absorptionswirkung gegenüber $H_2O$, $NH_3$ und $CO_2$ verwendet werden, die Prozeßabgase nach Verlassen der Molekularsiebstrecke ein Katalysatorsystem zur Verbrennung von $NH_3$-Resten zu $NO_x$ und schließlich erneut ein Molekularsieb zur $NO_x$-Absorption durchlaufen.

2. Einrichtung zur Durchführung des Verfahrens nach Anspruch 1, dadurch gekennzeichnet, daß in einer Ableitung für die Prozeßabgase zwei parallel liegende Molekularsiebe (2) und (3) zur Absorption von Ammoniak angeordnet sind, an die ein Katalysator (10) zum Verbrennen von Ammoniakresten zu $NO_x$ mit zwei nachgeschalteten, zueinander parallelen Molekularsieben (12) und (13) zur Absorption von $NO_x$ angeschlossen ist, daß jedes der Molekularsiebe (2) und (3) für Ammoniak neben einem Abschnitt zum Abtrennen von Ammoniak einen Abschnitt zum Abtrennen von $H_2O$ und einen Abschnitt zum Abtrennen von $CO_2$ aus den Abgasen enthält, daß dem Ausgang eines jeden Molekularsiebes (2) und (3) bzw. (12) und (13) Meßgeräte (8) und (9) für Ammoniak bzw. (16) für $NO_x$ zugeordnet sind, von denen Umschaltventile derart in Steuerabhängigkeit stehen, daß das eine von zwei parallelen Molekularsieben (2) und (3) bzw. (12) und (13) aus dem Abgasweg herausgeschaltet und dafür das andere in den Abgasweg hineingeschaltet wird, wenn eines der Meßgeräte Ammoniak- bzw. $NO_x$-Gehalt feststellt, und daß den Molekularsieben (2), (3) bzw. (12), (13) eine Einrichtung zum Spülen mit Stickstoff zu Regenerierzwecken zugeordnet ist, die derart mit den Umschaltventilen gekoppelt ist, daß aus dem Abgasweg herausgeschaltete Molekularsiebe mit Stickstoff gespült werden.

### Claims

1. A process for removing ammonia from process waste gases, in particular after a preceding $NH_3/CO_2$ absorptive washing, in which the process waste gases pass successively through a plurality of molecular sieves, characterised in that molecular sieves having a specific absorption action to $H_2O$, $NH_3$ and $CO_2$ are used as molecular sieves, the process waste gases, after leaving the molecular sieve section, pass through a catalyst system for the combustion of $NH_3$-residues to $NO_x$, and finally pass again through a molecular sieve for the absorption of $NO_x$.

2. Apparatus for carrying out the process according to claim 1, characterised in that in an outlet pipe for the process waste gases, there are arranged two molecular sieves (2) and (3) for the absorption of ammonia, which are arranged parallel to one another, to which molecular sieves there is connected a catalyst (10) for the combustion of ammonia residues to $NO_x$ and has two succeeding molecular sieves (12) and (13) for the absorption of $NO_x$ which are parallel to one another; that, in addition to a section for separating ammonia, each of the molecular sieves (2) and (3) for ammonia includes a section for separating $H_2O$ and a section for separating $CO_2$ from the waste gases; that the outlet of each molecular sieve (2) and (3), or (12) and (13) respectively, is provided with measuring devices (8) and (9) for ammonia or (16) for $NO_x$ respectively, by means of which change-over valves are controllable in such manner that one of two parallel molecular sieves (2) and (3), or (12) and (13), as the case may be, is switched out of the waste gas path and the other one is inserted into the waste gas path instead, if one of the measuring devices detects an ammonia or $NO_x$-content; and that the molecular sieves (2), (3), or (12), (13), are provided with a device for flushing with nitrogen for regeneration purposes, and which is coupled to the change-over valves in such a way that molecular sieves which have been switched out of the waste gas path are flushed with nitrogen.

## Revendications

1. Procédé pour éliminer l'ammoniac de gaz effluents, notamment après un lavage préalable par absorption de $NH_3/CO_2$, les gaz effluents passant successivement dans plusieurs tamis moléculaires, caractérisé en ce qu'il consiste à utiliser comme tamis moléculaire, ceux ayant un effet d'absorption spécifique de $H_2O$, $NH_3$ et $CO_2$, à faire passer les gaz effluents, après qu'ils ont quitté la zone de tamis moléculaire, dans un système de catalyseurs pour la combustion des restes de $NH_3$ en $NO_x$ et finalement, à les faire passer à nouveau dans un tamis moléculaire pour l'absorption de $NO_x$.

2. Installation pour exécuter le procédé selon la revendication 1, caractérisé en ce que dans un conduit d'évacuation des gaz effluents, sont montés en parallèle deux tamis moléculaires (2) et (3) pour l'absorption de l'ammoniac, auxquels fait suite un catalyseur (10) pour la combustion des restes d'ammoniac en $NO_x$, avec deux tamis moléculaires (12) et (13) montés en aval, en parallèle l'un par rapport à l'autre, pour l'absorption du $NO_x$, en ce que chacun des tamis moléculaires (2) et (3) pour l'ammoniac comprend, outre une section pour séparer l'ammoniac, une section pour séparer $H_2O$ et une section pour séparer $CO_2$ des gaz effluents, en ce qu'à la sortie de chaque tamis moléculaire (2) et (3), et respectivement (12) et (13) sont affectés des appareils de mesure (8) et (9) pour l'ammoniac et (16) pour $NO_x$, dont les soupapes de commutation sont en relation de commande de manière à mettre l'un des deux tamis moléculaires (2) et (3) et respectivement (12) et (13) en parallèle hors du trajet des gaz effluents, et pour cela à mettre l'autre sur le trajet des gaz effluents, quand l'un des appareils de mesure constate une teneur en ammoniac ou en $NO_x$, et en ce qu'aux tamis moléculaires (2) et (3) est affecté un dispositif de lavage par de l'azote en vue d'une régénération, qui est accouplé aux soupapes de commutation de manière à laver par de l'azote les tamis moléculaires qui sont hors du trajet des gaz effluents.